# EUROPEAN PATENT APPLICATION

(11) **EP 4 531 421 A1**
(43) Date of publication of application: **02.04.2025**
(21) Application number: 23814984.3
(22) Date of filing: 18.05.2023
(51) Int. Cl.: H04Q 11/00

(54) **DATA TRANSMISSION METHODS, OPTICAL LINE TERMINAL, OPTICAL NETWORK UNIT AND READABLE MEDIUM**

(30) Priority: 30.05.2022 CN 202210614586
(71) Applicant: ZTE CORPORATION, Shenzhen, Guangdong 518057 (CN)
(72) Inventor: JIANG, Yi, Shenzhen, Guangdong 518057 (CN); HUANG, Xingang, Shenzhen, Guangdong 518057 (CN); YANG, Bo, Shenzhen, Guangdong 518057 (CN)
(74) Representative: Canzler & Bergmeier Patentanwälte Partnerschaft mbB
(86) International application number: PCT/CN2023/095105
(87) International publication number: WO 2023/231800

(57) **Abstract**

Provided in the present disclosure is a data transmission method in an uplink direction, comprising: receiving an uplink optical signal; according to the uplink optical signal, generating second uplink electrical signals in a plurality of channels; according to the uplink granularity, performing channel alignment on the second uplink electrical signals in the plurality of channels for recovery so as to obtain a target uplink signal after the alignment. A data transmission method in a downlink direction comprises: receiving a downlink optical signal; according to the downlink optical signal, generating second downlink electrical signals in a plurality of channels; and according to the downlink granularity, performing channel alignment on the second downlink electric signals in the plurality of channels for recovery so as to obtain a target downlink signal after the alignment. Also provided in the present disclosure are an optical line terminal, an optical network unit and a computer readable medium.

## Description

### CROSS-REFERENCE TO RELATED APPLICATIONS

This application claims priority from Chinese patent application No. CN202210614586.5 titled "DATA TRANSMISSION METHODS, OPTICAL LINE TERMINAL, OPTICAL NETWORK UNIT AND READABLE MEDIUM" filed on May 30, 2022, the entire contents of which are incorporated herein by reference.

### TECHNICAL FIELD

The present disclosure relates to the technical field of communications, and particularly relates to a data transmission method, an optical line terminal, an optical network unit, and a computer-readable medium.

### BACKGROUND

The passive optical network (PON) is one of the hottest wired access technologies in current studies, in which an optical line terminal (OLT) is connected to a plurality of optical network units (ONUs) via an optical distribution network (ODN). Network structures of the PON are generally classified into two broad categories, point-to-point (P2P) and point-to-multiple point (P2MP). Information access of the PON is in two directions, a downlink direction in which the OLT transmits a signal to the ONU, and an uplink direction in which the ONU transmits a signal to the OLT.

Through evolution of several generations of technologies, an access rate of the PON has been developed from 1G PON to 50G PON now. However, with the increased access rate of the PON, the requirements on hardware and the implementation difficulty also become higher.

### SUMMARY

Embodiments of the present disclosure provide a data transmission method, an optical line terminal, an optical network unit, and a computer-readable medium.

In a first aspect, an embodiment of the present disclosure provides a data transmission method, including: receiving an uplink optical signal; generating, according to the uplink optical signal, second uplink electrical signals in a plurality of channels, wherein the second uplink electrical signals in the plurality of channels respectively correspond to first uplink electrical signals in the plurality of channels obtained by an uplink transmitting end performing cross-splitting on an initial uplink signal according to an uplink granularity; and performing, according to the uplink granularity, channel alignment on the second uplink electrical signals in the plurality of channels for recovering and obtaining a target uplink signal after the alignment.

In a second aspect, an embodiment of the present disclosure provides a data transmission method, including: performing, according to an uplink granularity, cross-splitting on an initial uplink signal to obtain first uplink electrical signals in a plurality of channels; generating an uplink optical signal according to the first uplink electrical signals in the plurality of channels; and transmitting the uplink optical signal.

In a third aspect, an embodiment of the present disclosure provides a data transmission method, including: receiving a downlink optical signal; generating, according to the downlink optical signal, second downlink electrical signals in a plurality of channels, wherein the second downlink electrical signals in the plurality of channels respectively correspond to first downlink electrical signals in the plurality of channels obtained by a downlink transmitting end performing cross-splitting on an initial downlink signal according to a downlink granularity; and performing, according to the downlink granularity, channel alignment on the second downlink electrical signals in the plurality of channels for recovering and obtaining a target downlink signal after the alignment.

In a fourth aspect, an embodiment of the present disclosure provides a data transmission method, including: performing, according to a downlink granularity, cross-splitting on an initial downlink signal to obtain first downlink electrical signals in a plurality of channels; generating a downlink optical signal according to the first downlink electrical signals in the plurality of channels; and transmitting the downlink optical signal.

In a fifth aspect, an embodiment of the present disclosure provides an optical line terminal, including: one or more processors; a memory having one or more programs stored thereon which, when executed by the one or more processors, cause the one or more processors to implement the data transmission method according to the first aspect of the embodiment of the present disclosure, and/or the data transmission method according to the fourth aspect of the embodiment of the present disclosure.

In a sixth aspect, an embodiment of the present disclosure provides an optical network unit, including: one or more processors; a memory having one or more programs stored thereon which, when executed by the one or more processors, cause the one or more processors to implement the data transmission method according to the second aspect of the embodiment of the present disclosure, and/or the data transmission method according to the third aspect of the embodiment of the present disclosure.

In a seventh aspect, an embodiment of the present disclosure provides a computer-readable medium storing a computer program thereon which, when executed by a processor, causes the data transmission method according to the first aspect of the embodiment of the present disclosure, and/or the data transmission method according to the second aspect of the embodiment of the present disclosure, and/or the data transmission method according to the third aspect of the embodiment of the present disclosure, and/or the data transmission method according to the fourth aspect of the embodiment of the present disclosure to be implemented.

### BRIEF DESCRIPTION OF DRAWINGS

FIG. 1 is a flowchart of a data transmission method according to the present disclosure;
FIG. 2 is a flowchart of some operations in a data transmission method according to the present disclosure;
FIG. 3 is a flowchart of some operations in a data transmission method according to the present disclosure;
FIG. 4 is a flowchart of some operations in a data transmission method according to the present disclosure;
FIG. 5 is a flowchart of some operations in a data transmission method according to the present disclosure;
FIG. 6 is a flowchart of some operations in a data transmission method according to the present disclosure;
FIG. 7 is another flowchart of a data transmission method according to the present disclosure;
FIG. 8 is another flowchart of a data transmission method according to the present disclosure;
FIG. 9 is a flowchart of some operations in a data transmission method according to the present disclosure;
FIG. 10 is a flowchart of some operations in a data transmission method according to the present disclosure;
FIG. 11 is a flowchart of some operations in a data transmission method according to the present disclosure;
FIG. 12 is another flowchart of a data transmission method according to the present disclosure;
FIG. 13 is a block diagram of an optical line terminal according to the present disclosure;
FIG. 14 is a block diagram of an optical network unit according to the present disclosure;
FIG. 15 is a block diagram of a computer-readable medium according to the present disclosure;
FIG. 16 is a schematic diagram of a data structure in which PSync is located;
FIG. 17 is a schematic diagram of a data structure in which Delimiter is located;
FIG. 18 is a schematic diagram of an optical line terminal as a transmitting end in a downlink direction;
FIG. 19 is a schematic diagram of an optical network unit as a receiving end in a downlink direction;
FIG. 20 is a schematic diagram of an optical network unit as a transmitting end in an uplink direction; and
FIG. 21 is a schematic diagram of an optical line terminal as a receiving end in an uplink direction.

### DETAIL DESCRIPTION OF EMBODIMENTS

To improve understanding of the technical solution of the present disclosure for those skilled in the art, the data transmission method, the optical line terminal, the optical network unit and the computer-readable medium according to the present disclosure will be described below in detail in conjunction with the accompanying drawings.

Exemplary embodiments will be described more sufficiently below with reference to the accompanying drawings, but which may be embodied in different forms and should not be construed as limited to the embodiments set forth herein. Rather, these embodiments are provided so that the present disclosure will be thorough and complete, and will fully convey the scope of the present disclosure to those skilled in the art.

The embodiments of the present disclosure and features thereof may be combined with each other as long as they are not contradictory.

As used herein, the term "and/or" includes any and all combinations of one or more of the associated listed items.

The terminology used herein is for the purpose of describing specific embodiments only and is not intended to limit the present disclosure. As used herein, the singular forms "a", "an" and "the" are intended to include the plural forms as well, unless the context clearly indicates otherwise. It will be further understood that as used herein, the terms "comprise" and/or "consist of ..." specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the existing art and the present disclosure, and will not be interpreted in an idealized or overly formal sense unless expressly so defined herein.

With the increased access rate of the PON, the requirements on hardware also become higher. For example, a 50G non-return-to-zero (NRZ) signal in the 50G PON needs to be subjected to electrical-to-optical conversion at a transmitting end and optical-to-electrical conversion at a receiving end during optical fiber transmission. Compared with a SERializer/DESerializer (SERDES) for 25G NRZ signal transmission, a SERDES for 50G NRZ signal transmission has higher requirements on the hardware device and the printed circuit board, and the technology is not mature enough, making it more difficult to implement 50G NRZ signal transmission. On the other hand, the existing art for implementing high-rate optical transmission by converting an NRZ signal into 4 level pulse amplitude modulation (PAM4) signal does not comply with standard requirements of ITU-T.

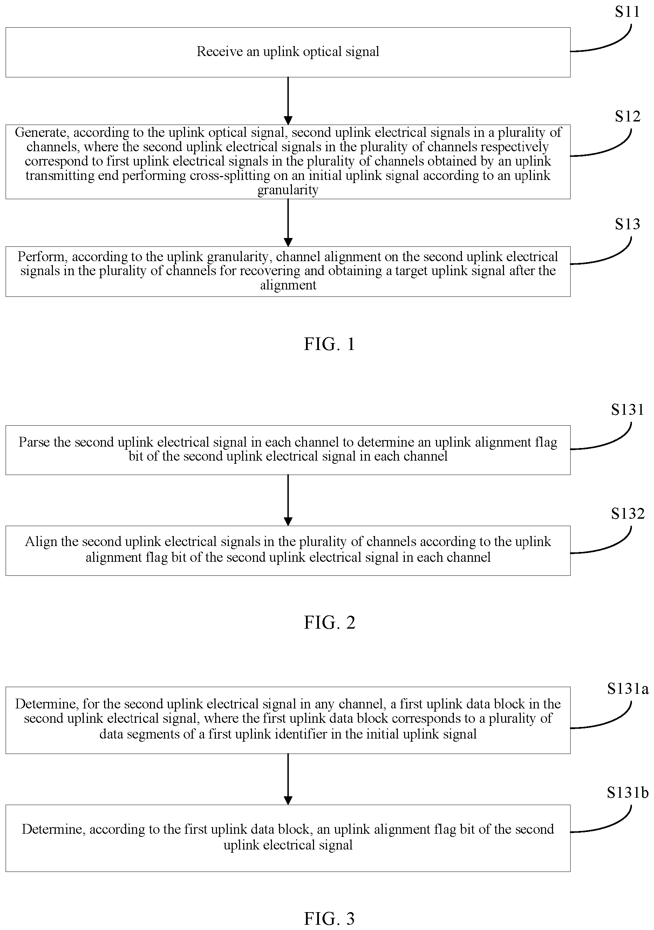

In view of this, referring to FIG. 1, an embodiment of the present disclosure provides a data transmission method which includes the following operations S11 to S13.

At operation S11, receiving an uplink optical signal.

At operation S12, generating, according to the uplink optical signal, second uplink electrical signals in a plurality of channels, where the second uplink electrical signals in the plurality of channels respectively correspond to first uplink electrical signals in the plurality of channels obtained by an uplink transmitting end performing cross-splitting on an initial uplink signal according to an uplink granularity.

At operation S13, performing, according to the uplink granularity, channel alignment on the second uplink electrical signals in the plurality of channels for recovering and obtaining a target uplink signal after the alignment.

The data transmission method provided in the embodiment of the present disclosure is applied to a receiving end in an uplink direction. In an embodiment of the present disclosure, in the uplink direction, an optical network unit (ONU) is used as a transmitting end, and an optical line terminal (OLT) is used as a receiving end.

In an embodiment of the present disclosure, an uplink receiving end receives an optical signal transmitted from an uplink transmitting end. At the uplink transmitting end, cross-splitting are performed on the initial uplink signal according to the preset uplink granularity to obtain the first uplink electrical signals in the plurality of channels, and then the uplink optical signal is generated according to the first uplink electrical signals in the plurality of channels and transmitted to the uplink receiving end. According to the received uplink optical signal, the uplink receiving end generates the second uplink electrical signals in the plurality of channels, where the plurality of second uplink electrical signals at the uplink receiving end are in one-to-one correspondence with the plurality of first uplink electrical signals at the uplink transmitting end. In other words, the number of channels at the uplink transmitting end and the number of channels at the uplink receiving end is same, and the plurality of channels at the uplink transmitting end are in one-to-one correspondence with the plurality of channels at the uplink receiving end. The number of channels is not particularly limited in the present disclosure, for example, the number of channels may be 2, 4, 8, or the like.

It should be noted that, in the embodiment of the present disclosure, the uplink transmitting end performing cross-splitting on the initial uplink signal according to the preset uplink granularity refers to dividing, according to the preset uplink granularity, the initial uplink signal into a plurality of data segments, where each data segment consists of at least one bit satisfying the preset uplink granularity in the initial uplink signal. Assuming that the uplink transmitting end has X channels, every X adjacent data segments in the initial uplink signal are divided into X different channels, respectively, and a bit stream formed by the data segments divided into each channel is the first uplink electrical signal in the channel. For example, the uplink transmitting end has X channels, and the preset uplink granularity is N bits, that is, every N bits in the initial uplink signal are divided into a data segment, then a bit stream obtained by splicing an (iX)N^{th} bit and the following N-1 bits is taken as the first uplink electrical signal in one channel, a bit stream obtained by splicing an (iX+1)N^{th} bit and the following N-1 bits is taken as the first uplink electrical signal in one channel, ..., and a bit stream obtained by splicing an (iX+X-1)N^{th} bit and the following N-1 bits is taken as the first uplink electrical signal in one channel, so as to obtain X first uplink electrical signals corresponding to the X channels, respectively, where i takes 0, 1, 2, 3, ... in sequence.

In some embodiments, the uplink transmitting end has two channels, and when cross-splitting are performed on the initial uplink signal according to the preset uplink granularity, the plurality of data segments obtained by splitting the initial uplink signal may be classified into odd segments and even segments. A bit stream obtained by splicing the odd segments is taken as one first uplink electrical signal, and a bit stream obtained by splicing the even segments is taken as the other first uplink electrical signal.

The preset granularity is not particularly limited in the present disclosure, for example, the preset granularity may be 1 bit, 4 bits, or 8 bits.

The initial uplink signal is not particularly limited in the present disclosure, for example, the initial uplink signal is any one of an NRZ signal, a PAM4 signal, or a bitstream scrambling/bitstream interleaving signal.

In the embodiments of the present disclosure, by performing cross-splitting on the initial uplink signal by the uplink transmitting end, a rate of the NRZ signal is reduced. That is, the plurality of first uplink electrical signals obtained by performing cross-splitting on the initial uplink signal each have a rate lower than the initial uplink signal. In some embodiments, a sum of rates of the plurality of first uplink electrical signals is equal to the rate of the initial uplink signal. For example, the initial uplink signal is a 50G NRZ signal, and two 25G NRZ signals are obtained through cross-splitting; or the initial uplink signal is a 100G NRZ signal, and two 50G NRZ signals are obtained through cross-splitting; or the initial uplink signal is a 100G NRZ signal, and four 25G NRZ signals are obtained through cross-splitting.

In an embodiment of the present disclosure, the plurality of second uplink electrical signals generated by the uplink receiving end according to the received uplink optical signal has the same rate as the plurality of first uplink electrical signals at the transmitting end. For example, if the uplink transmitting end generates two 25G NRZ signals, the uplink receiving end generates two 25G NRZ signals according to the uplink optical signal; and if the uplink transmitting end generates four 25G NRZ signals, the uplink receiving end generates four 25G NRZ signals according to the uplink optical signal. The uplink receiving end performs cross-recovery on the second uplink electrical signals in the plurality of channels according to the preset granularity. That is, the plurality of second uplink electrical signals are recovered to a target uplink signal according to a rule based on which the uplink transmitting end performs cross-splitting on the initial uplink signal. In some embodiments, the target uplink signal is the same as the initial uplink signal. In some embodiments, the target uplink signal is an approximation of the initial uplink signal.

It should be noted that the target uplink signal obtained by the uplink receiving end through the cross-recovery has the same rate as the initial uplink signal, and the uplink optical signal transmitted between the transmitting end and the receiving end also has the same rate as the initial uplink signal, so that high-rate optical transmission can be implemented by low-rate hardware devices. For example, the initial uplink signal is a 50G NRZ signal which is split into two 25G NRZ signals after cross-splitting at the transmitting end, and a 50G NRZ signal is recovered at the receiving end to obtain the target uplink signal. The transmitting end and the receiving end may process the two 25G NRZ signals based on 25G hardware devices, and transmission is performed with a 50G optical signal, thereby implementing 50G optical transmission based on 25G hardware devices.

According to the data transmission method provided in the embodiment of the present disclosure, in the uplink direction, the transmitting end splits a high-rate initial signal into a plurality of low-rate electrical signals through cross-splitting, which are then transmitted to the receiving end through the high-rate optical signal, while the receiving end can recover the plurality of low-rate electrical signals to the high-rate target signal through cross-recovery. In this process, both the transmitting end and the receiving end can process low-rate electrical signals by low-rate hardware devices, so that high-rate optical transmission can be implemented based on more cheap and mature low-rate hardware devices while reducing the implementation difficulty of high-rate optical transmission.

In an embodiment of the present disclosure, the receiving end performs cross-recovery on the second uplink electrical signals in the plurality of channels according to the preset granularity. That is, the plurality of second uplink electrical signals are recovered to the target uplink signal according to the rule based on which the transmitting end performs cross-splitting on the initial uplink signal.

How to perform channel alignment on the second uplink electrical signals in the plurality of channels according to the uplink granularity is not particularly limited in the present disclosure.

In some embodiments, each second uplink electrical signal carries an uplink alignment flag bit, and the second uplink electrical signals in the plurality of channels are aligned according to uplink alignment flag bits of the plurality of second uplink electrical signals.

Accordingly, referring to FIG. 2, performing, according to the uplink granularity, channel alignment on the second uplink electrical signals in the plurality of channels (i.e., operation S13) includes the following operations S131 to S132.

At operation S131, parsing the second uplink electrical signal in each channel to determine an uplink alignment flag bit of the second uplink electrical signal in each channel.

At operation S132, aligning the second uplink electrical signals in the plurality of channels according to the uplink alignment flag bit of the second uplink electrical signal in each channel.

The uplink alignment flag bit in the second uplink electrical signal is not particularly limited in the present disclosure.

In some embodiments, when the transmitting end splits the initial uplink signal into the plurality of first uplink electrical signals, a specific bit sequence is carried in each of the first uplink electrical signals as the uplink alignment flag bit, and the plurality of second uplink electrical signals obtained by the receiving end according to the uplink optical signal also carry the uplink alignment flag bit.

In some embodiments, bit streams obtained by performing cross-splitting on a specific field in the initial uplink signal are spliced as the uplink alignment flag bit.

Accordingly, in some embodiments, referring to FIG. 3, parsing the second uplink electrical signal in each channel to determine the uplink alignment flag bit of the second uplink electrical signal in each channel (i.e., operation S131) includes the following operations S131a to S131b.

At operation S131a, determining, for the second uplink electrical signal in any channel, a first uplink data block in the second uplink electrical signal, where the first uplink data block corresponds to a plurality of data segments of a first uplink identifier in the initial uplink signal.

At operation S131b, determining, according to the first uplink data block, an uplink alignment flag bit of the second uplink electrical signal.

In the first uplink identifier, the plurality of data segments corresponding to first uplink data blocks in the plurality of channels are arranged to be crossed with each other.

It should be noted that, in the embodiment of the present disclosure, the first uplink data block is obtained by splicing bit streams obtained by performing cross-splitting on the first uplink identifier. In other words, the plurality of data segments in the first uplink identifier are spliced to obtain the first uplink data block, and the data segments corresponding to first uplink data blocks in the plurality of channels are arranged to be crossed with each other in the first uplink identifier. Therefore, the first uplink identifier can be recovered by cross arrangement of the data segments of the first uplink data blocks in the plurality of channels.

The first uplink identifier, i.e., a specific field in the initial uplink signal corresponding to the bit stream as the uplink alignment flag bit, is not particularly limited in the present disclosure. In some embodiments, in the uplink direction, the first uplink identifier is associated with a physical synchronization block upstream (PSBu). For example, when the initial uplink signal is a non-interleaved bit stream, the first uplink identifier is Delimiter in the PSBu; and when the initial uplink signal is an interleaved bit stream, the first uplink identifier is a specific bit stream formed by interleaving Delimiter in the PSBu, and is closely associated with an interleaving depth.

In some embodiments, bit streams obtained by performing cross-splitting on the first uplink identifier are spliced as the uplink alignment flag bit. For example, when two channels are provided, the first uplink identifier is Delimiter, bit streams composed of odd segments of Delimiter are spliced as the uplink alignment flag bit of one channel, and bit streams composed of even segments of Delimiter are spliced as the uplink alignment flag bit of the other channel.

Accordingly, in some embodiments, determining, according to the first uplink data block, the uplink alignment flag bit of the second uplink electrical signal (i.e., operation S131b) includes: taking the first uplink data block as the uplink alignment flag bit of the second uplink electrical signal.

In some embodiments, while determining, according to the first uplink data block, the uplink alignment flag bit of the second uplink electrical signal, the first uplink data block is extended to avoid increasing the probability of synchronization errors caused by a length of the uplink alignment flag bit smaller than a length of the first uplink identifier after cross-splitting.

How to extend the first uplink data block is not particularly limited in the present disclosure.

In some embodiments, first uplink data blocks of two consecutive physical frames in the second uplink electrical signal are spliced as the uplink alignment flag bit.

Accordingly, in some embodiments, determining, according to the first uplink data block, the uplink alignment flag bit of the second uplink electrical signal (i.e., operation S131b) includes: splicing first uplink data blocks of two consecutive physical frames in the channel to obtain the uplink alignment flag bit of the second uplink electrical signal.

In some embodiments, a length of the first uplink data block is extended to obtain the uplink alignment flag bit.

Accordingly, in some embodiments, determining, according to the first uplink data block, the uplink alignment flag bit of the second uplink electrical signal (i.e., operation S131b) includes: extending a length of the first uplink data block to obtain the uplink alignment flag bit of the second uplink electrical signal, where the extended length of the first uplink data block is equal to a length of the first uplink identifier.

How to extend the length of the first uplink data block is not particularly limited in the present disclosure, for example, the length of the first uplink data block may be extended by means of copying, XOR operation, and the like.

In some embodiments, the synchronization performance is determined by detecting a decoding condition of forward error correction (FEC) codes and a deframing condition of gigabit-capable PON (GPON) encapsulation mode (GEM) frames, and re-synchronization is performed once the synchronization performance is degraded, so as to avoid increasing the probability of synchronization errors caused by the length of the uplink alignment flag bit smaller than the length of the first identifier after cross-splitting.

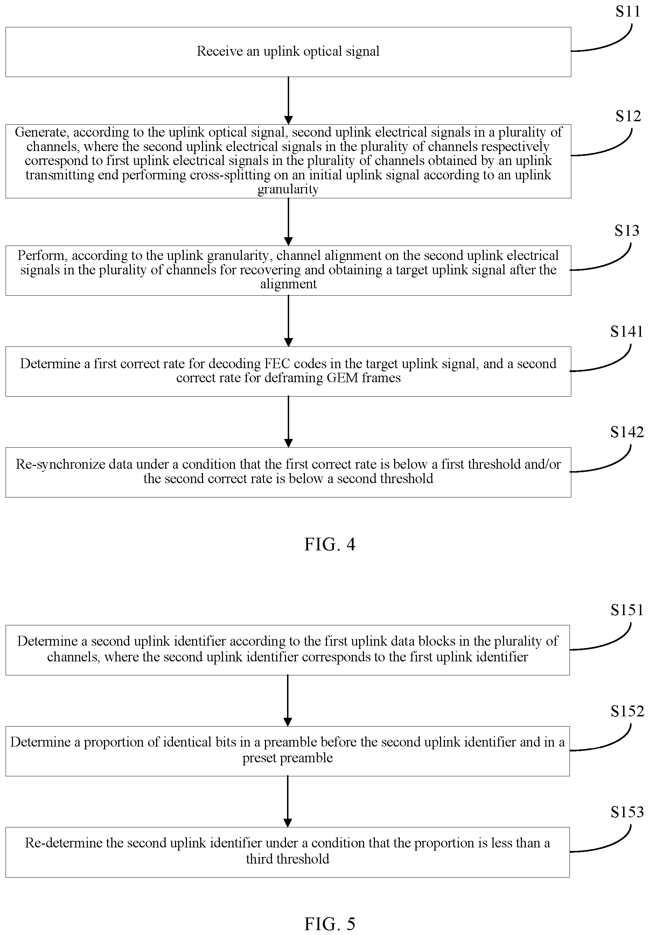

Accordingly, in some embodiments, referring to FIG. 4, after performing, according to the uplink granularity, channel alignment on the second uplink electrical signals in the plurality of channels for recovering and obtaining the target uplink signal after the alignment (i.e., operation S13), the data transmission method further includes the following operations S141 to S142.

At operation S141, determining a first correct rate for decoding FEC codes in the target uplink signal, and a second correct rate for deframing GEM frames.

At operation S142, re-synchronizing data under a condition that the first correct rate is below a first threshold and/or the second correct rate is below a second threshold.

In some embodiments, the first correct rate and the second correct rate may be represented by the number of FEC codes correctly decoded and the number of GEM frames correctly deframed, and the synchronization performance may be determined by determining the number of FEC codes correctly decoded and/or the number of GEM frames correctly deframed.

An embodiment of the present disclosure further provides a corresponding solution for uplink false lock.

In some embodiments, a preamble pattern is a pseudo random binary sequence (PRBS) pattern configured by the OLT with an indefinite length, which, when being divided into two channels for transmission, may be the same as one of Delimiter division results of PSBu segments, thereby causing false lock of the ONU at the OLT side. Such false lock may be avoided by comparing a preamble corresponding to Delimiter with a preset preamble.

Accordingly, in some embodiments, referring to FIG. 5, the data transmission method further includes the following operations S151 to S153.

At operation S151, determining a second uplink identifier according to the first uplink data blocks in the plurality of channels, where the second uplink identifier corresponds to the first uplink identifier.

At operation S152, determining a proportion of identical bits in a preamble before the second uplink identifier and in a preset preamble.

At operation S153, re-determining the second uplink identifier under a condition that the proportion is less than a third threshold.

In an embodiment of the present disclosure, if the first identifier in the initial uplink signal is Delimiter, the second uplink identifier is Delimiter in the target uplink signal.

In some embodiments, after the high-rate initial uplink signal is split into a plurality of low-rate electrical signals through cross-splitting, an original sequential relationship of 0 and 1 in the first uplink identifier is changed, which may cause false lock due to the receiving end misjudging the transmitting end as abnormal. For example, after receiving data from an ONU, the OLT may misjudges the ONU as a rogue ONU. False lock can be avoided by detecting each burst.

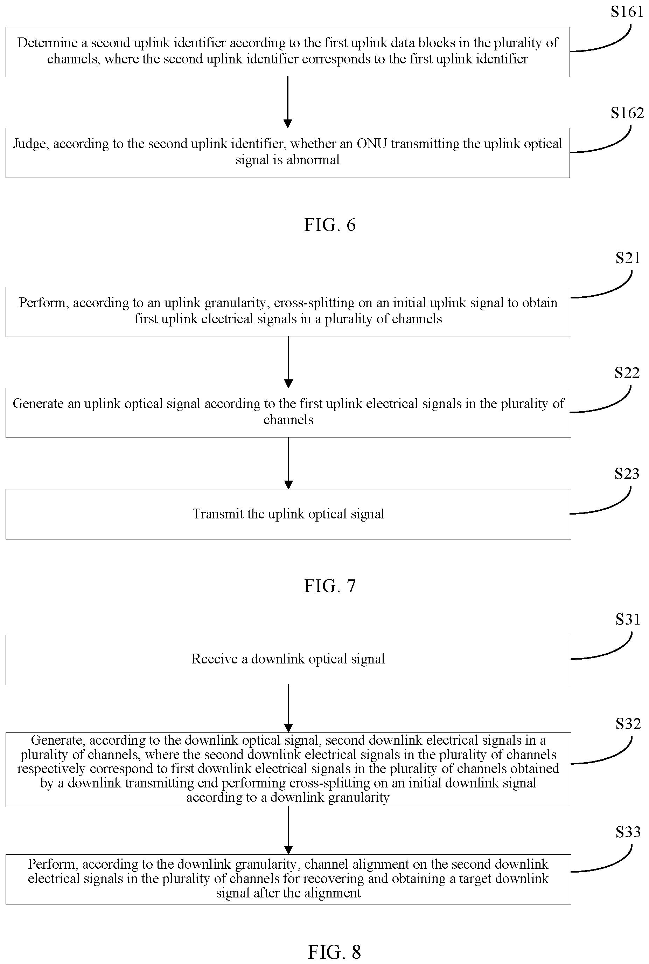

Accordingly, in some embodiments, referring to FIG. 6, the data transmission method further includes the following operations S161 to S162.

At operation S161, determining a second uplink identifier according to the first uplink data blocks in the plurality of channels, where the second uplink identifier corresponds to the first uplink identifier.

At operation S162, judging, according to the second uplink identifier, whether an ONU transmitting the uplink optical signal is abnormal.

In some embodiments, operations S161 and S162 are implemented as: performing alignment and PSBu detection once after synchronization to check whether there is a rogue ONU; and processing according to a rogue ONU mechanism if there is a rogue ONU.

How to generate the second uplink electrical signals in the plurality of channels according to the uplink optical signal is not particularly limited in the present disclosure.

In some embodiments, the transmitting end modulates the first uplink electrical signals in the plurality of channels to obtain the uplink optical signal, and the receiving end demodulates the uplink optical signal correspondingly to obtain the second uplink electrical signals in the plurality of channels.

Accordingly, in some embodiments, generating, according to the uplink optical signal, the second uplink electrical signals in the plurality of channels (i.e., operation S12) includes: demodulating the uplink optical signal to obtain the second uplink electrical signals in the plurality of channels.

Referring to FIG. 7, an embodiment of the present disclosure further provides a data transmission method which includes the following operations S21 to S23.

At operation S21, performing, according to an uplink granularity, cross-splitting on an initial uplink signal to obtain first uplink electrical signals in a plurality of channels.

At operation S22, generating an uplink optical signal according to the first uplink electrical signals in the plurality of channels.

At operation S23, transmitting the uplink optical signal.

The data transmission method provided in the embodiment of the present disclosure is applied to an uplink transmitting end. In an embodiment of the present disclosure, in the uplink direction, an ONU is used as a transmitting end, and an OLT is used as a receiving end.

In an embodiment of the present disclosure, at the transmitting end, cross-splitting are performed on the initial uplink signal according to the preset uplink granularity to obtain the first uplink electrical signals in the plurality of channels, and then the uplink optical signal is generated according to the first uplink electrical signals in the plurality of channels and transmitted to the receiving end. The number of channels is not particularly limited in the present disclosure, for example, the number of channels may be 2, 4, 8, or the like.

It should be noted that, in the embodiment of the present disclosure, the uplink transmitting end performing cross-splitting on the initial uplink signal according to the preset uplink granularity refers to dividing, according to the preset uplink granularity, the initial uplink signal into a plurality of data segments, where each data segment consists of at least one bit satisfying the preset uplink granularity in the initial uplink signal. Assuming that the uplink transmitting end has X channels, every X adjacent data segments in the initial uplink signal are divided into X different channels, respectively, and a bit stream formed by the data segments divided into each channel is the first uplink electrical signal in the channel. For example, the uplink transmitting end has X channels, and the preset uplink granularity is N bits, that is, every N bits in the initial uplink signal are divided into a data segment, then a bit stream obtained by splicing an (iX)N^{th} bit and the following N-1 bits is taken as the first uplink electrical signal in one channel, a bit stream obtained by splicing an (iX+1)N^{th} bit and the following N-1 bits is taken as the first uplink electrical signal in one channel, ..., and a bit stream obtained by splicing an (iX+X-1)N^{th} bit and the following N-1 bits is taken as the first uplink electrical signal in one channel, so as to obtain X first uplink electrical signals corresponding to the X channels, respectively, where i takes 0, 1, 2, 3, ... in sequence.

In some embodiments, the uplink transmitting end has two channels, and when cross-splitting are performed on the initial uplink signal according to the preset uplink granularity, the plurality of data segments obtained by splitting the initial uplink signal may be classified into odd segments and even segments. A bit stream obtained by splicing the odd segments is taken as one first uplink electrical signal, and a bit stream obtained by splicing the even segments is taken as the other first uplink electrical signal.

The preset granularity is not particularly limited in the present disclosure, for example, the preset granularity may be 1 bit, 4 bits, or 8 bits.

In an embodiment of the present disclosure, by performing cross-splitting on the initial uplink signal by the uplink transmitting end, a rate of the NRZ signal is reduced. That is, the plurality of first uplink electrical signals obtained by performing cross-splitting on the initial uplink signal each have a rate lower than the initial uplink signal. In some embodiments, a sum of rates of the plurality of first uplink electrical signals is equal to the rate of the initial uplink signal. For example, the initial uplink signal is a 50G NRZ signal, and two 25G NRZ signals are obtained through cross-splitting; or the initial uplink signal is a 100G NRZ signal, and two 50G NRZ signals are obtained through cross-splitting; or the initial uplink signal is a 100G NRZ signal, and four 25G NRZ signals are obtained through cross-splitting.

In an embodiment of the present disclosure, by reducing the rate of the NRZ signal, high-rate optical transmission can be implemented by low-rate hardware devices. For example, the initial uplink signal is a 50G NRZ signal which is split into two 25G NRZ signals after cross-splitting at the transmitting end, and a 50G NRZ signal is recovered at the receiving end. The transmitting end and the receiving end may process the two 25G NRZ signals based on 25G hardware devices, and transmission is performed with a 50G optical signal, thereby implementing 50G optical transmission based on 25G hardware devices.

According to the data transmission method provided in the embodiment of the present disclosure, in the uplink direction, the transmitting end splits a high-rate initial signal into a plurality of low-rate electrical signals through cross-splitting, which are then transmitted to the receiving end through the high-rate optical signal, while the receiving end can recover the plurality of low-rate electrical signals to the high-rate target signal through cross-recovery. In this process, both the transmitting end and the receiving end can process low-rate electrical signals by low-rate hardware devices, so that high-rate optical transmission can be implemented based on more cheap and mature low-rate hardware devices while reducing the implementation difficulty of high-rate optical transmission.

How to generate the uplink optical signal according to the first uplink electrical signals in the plurality of channels is not particularly limited in the present disclosure.

In some embodiments, generating the uplink optical signal according to the first uplink electrical signals in the plurality of channels (i.e., operation S22) includes: modulating the first uplink electrical signals in the plurality of channels to obtain the uplink optical signal.

Referring to FIG. 8, an embodiment of the present disclosure further provides a data transmission method which includes the following operations S31 to S33.

At operation S31, receiving a downlink optical signal.

At operation S32, generating, according to the downlink optical signal, second downlink electrical signals in a plurality of channels, where the second downlink electrical signals in the plurality of channels respectively correspond to first downlink electrical signals in the plurality of channels obtained by a downlink transmitting end performing cross-splitting on an initial downlink signal according to a downlink granularity.

At operation S33, performing, according to the downlink granularity, channel alignment on the second downlink electrical signals in the plurality of channels for recovering and obtaining a target downlink signal after the alignment.

The data transmission method provided in the embodiment of the present disclosure is applied to a downlink receiving end. In an embodiment of the present disclosure, in the downlink direction, an OLT is used as a transmitting end, and an ONU is used as a receiving end.

In an embodiment of the present disclosure, a downlink receiving end receives an optical signal transmitted from a downlink transmitting end. At the downlink transmitting end, cross-splitting are performed on the initial downlink signal according to the preset downlink granularity to obtain the first downlink electrical signals in the plurality of channels, and then the downlink optical signal is generated according to the first downlink electrical signals in the plurality of channels and transmitted to the downlink receiving end. According to the received downlink optical signal, the downlink receiving end generates the second downlink electrical signals in the plurality of channels, where the plurality of second downlink electrical signals at the downlink receiving end are in one-to-one correspondence with the plurality of first downlink electrical signals at the downlink transmitting end. In other words, the number of channels at the downlink transmitting end and the number of channels the downlink receiving end is same, and the plurality of channels at the downlink transmitting end are in one-to-one correspondence with the plurality of channels at the downlink receiving end. The number of channels is not particularly limited in the present disclosure, for example, the number of channels may be 2, 4, 8, or the like.

It should be noted that, in the embodiment of the present disclosure, the downlink transmitting end performing cross-splitting on the initial downlink signal according to the preset downlink granularity refers to dividing, according to the preset downlink granularity, the initial downlink signal into a plurality of data segments, where each data segment consists of at least one bit satisfying the preset downlink granularity in the initial downlink signal. Assuming that the downlink transmitting end has X channels, every X adjacent data segments in the initial downlink signal are divided into X different channels, respectively, and a bit stream formed by the data segments divided into each channel is the first downlink electrical signal in the channel. For example, the downlink transmitting end has X channels, and the preset downlink granularity is N bits, that is, every N bits in the initial downlink signal are divided into a data segment, then a bit stream obtained by splicing an (iX)N^{th} bit and the following N-1 bits is taken as the first downlink electrical signal in one channel, a bit stream obtained by splicing an (iX+1)N^{th} bit and the following N-1 bits is taken as the first downlink electrical signal in one channel, ..., and a bit stream obtained by splicing an (iX+X-1)N^{th} bit and the following N-1 bits is taken as the first downlink electrical signal in one channel, so as to obtain X first downlink electrical signals corresponding to the X channels, respectively, where i takes 0, 1, 2, 3, ... in sequence.

In some embodiments, the downlink transmitting end has two channels, and when cross-splitting are performed on the initial downlink signal according to the preset downlink granularity, the plurality of data segments obtained by splitting the initial downlink signal may be classified into odd segments and even segments. A bit stream obtained by splicing the odd segments is taken as one first downlink electrical signal, and a bit stream obtained by splicing the even segments is taken as the other first downlink electrical signal.

The preset granularity is not particularly limited in the present disclosure, for example, the preset granularity may be 1 bit, 4 bits, or 8 bits.

The initial downlink signal is not particularly limited in the present disclosure, for example, the initial downlink signal is any one of an NRZ signal, a PAM4 signal, or a bitstream scrambling/bitstream interleaving signal.

In an embodiment of the present disclosure, by performing cross-splitting on the initial downlink signal by the downlink transmitting end, a rate of the NRZ signal is reduced. That is, the plurality of first downlink electrical signals obtained by performing cross-splitting on the initial downlink signal each have a rate lower than the initial downlink signal. In some embodiments, a sum of rates of the plurality of first downlink electrical signals is equal to the rate of the initial downlink signal. For example, the initial downlink signal is a 50G NRZ signal, and two 25G NRZ signals are obtained through cross-splitting; or the initial downlink signal is a 100G NRZ signal, and two 50G NRZ signals are obtained through cross-splitting; or the initial downlink signal is a 100G NRZ signal, and four 25G NRZ signals are obtained through cross-splitting.

In an embodiment of the present disclosure, the plurality of second downlink electrical signals generated by the downlink receiving end according to the received downlink optical signal has the same rate as the plurality of first downlink electrical signals at the transmitting end. For example, if the downlink transmitting end generates two 25G NRZ signals, the downlink receiving end generates two 25G NRZ signals according to the downlink optical signal; and if the downlink transmitting end generates four 25G NRZ signals, the downlink receiving end generates four 25G NRZ signals according to the downlink optical signal. The downlink receiving end performs cross-recovery on the second downlink electrical signals in the plurality of channels according to the preset granularity. That is, the plurality of second downlink electrical signals are recovered to a target downlink signal according to a rule based on which the downlink transmitting end performs cross-splitting on the initial downlink signal. In some embodiments, the target downlink signal is the same as the initial downlink signal. In some embodiments, the target downlink signal is an approximation of the initial downlink signal.

It should be noted that the target downlink signal obtained by the downlink receiving end through the cross-recovery has the same rate as the initial downlink signal, and the downlink optical signal transmitted between the transmitting end and the receiving end also has the same rate as the initial downlink signal, so that high-rate optical transmission can be implemented by low-rate hardware devices. For example, the initial downlink signal is a 50G NRZ signal which is split into two 25G NRZ signals after cross-splitting at the transmitting end, and a 50G NRZ signal is recovered at the receiving end to obtain the target downlink signal. The transmitting end and the receiving end may process the two 25G NRZ signals based on 25G hardware devices, and transmission is performed with a 50G optical signal, thereby implementing 50G optical transmission based on 25G hardware devices.

According to the data transmission method provided in the embodiment of the present disclosure, in the downlink direction, the transmitting end splits a high-rate initial signal into a plurality of low-rate electrical signals through cross-splitting, which are then transmitted to the receiving end through the high-rate optical signal, while the receiving end can recover the plurality of low-rate electrical signals to the high-rate target signal through cross-recovery. In this process, both the transmitting end and the receiving end can process low-rate electrical signals by low-rate hardware devices, so that high-rate optical transmission can be implemented based on more cheap and mature low-rate hardware devices while reducing the implementation difficulty of high-rate optical transmission.

In an embodiment of the present disclosure, the receiving end performs cross-recovery on the second downlink electrical signals in the plurality of channels according to the preset granularity. That is, the plurality of second downlink electrical signals are recovered to the target downlink signal according to the rule based on which the transmitting end performs cross-splitting on the initial downlink signal.

How to perform channel alignment on the second downlink electrical signals in the plurality of channels according to the downlink granularity is not particularly limited in the present disclosure.

In some embodiments, each second downlink electrical signal carries a downlink alignment flag bit, and the second downlink electrical signals in the plurality of channels are aligned according to downlink alignment flag bits of the plurality of second downlink electrical signals.

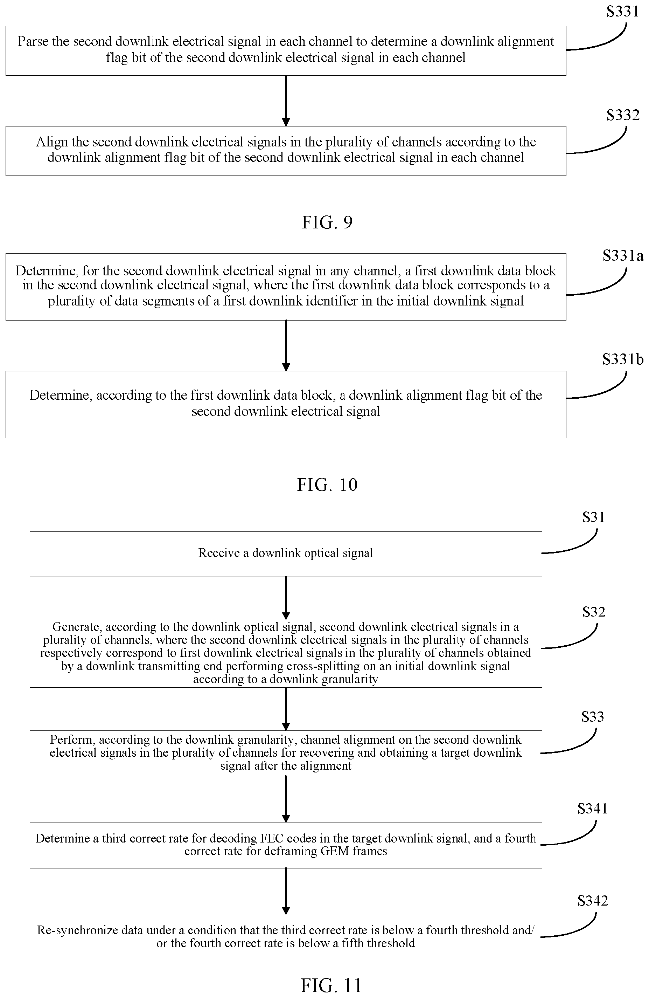

Accordingly, referring to FIG. 9, performing, according to the downlink granularity, channel alignment on the second downlink electrical signals in the plurality of channels (i.e., operation S33) includes the following operations S331 to S332.

At operation S331, parsing the second downlink electrical signal in each channel to determine a downlink alignment flag bit of the second downlink electrical signal in each channel.

At operation S332, aligning the second downlink electrical signals in the plurality of channels according to the downlink alignment flag bit of the second downlink electrical signal in each channel.

The downlink alignment flag bit in the second downlink electrical signal is not particularly limited in the present disclosure.

In some embodiments, when the transmitting end splits the initial downlink signal into the plurality of first downlink electrical signals, a specific bit sequence is carried in each of the first downlink electrical signal as the downlink alignment flag bit; and the plurality of second downlink electrical signals obtained by the receiving end according to the downlink optical signal also carry the downlink alignment flag bit.

In some embodiments, bit streams obtained by performing cross-splitting on a specific field in the initial downlink signal are spliced as the downlink alignment flag bit.

Accordingly, in some embodiments, referring to FIG. 10, parsing the second downlink electrical signal in each channel to determine the downlink alignment flag bit of the second downlink electrical signal in each channel (i.e., operation S331) includes the following operations S331a to S331b.

At operation S331a, determining, for the second downlink electrical signal in any channel, a first downlink data block in the second downlink electrical signal, where the first downlink data block corresponds to a plurality of data segments of a first downlink identifier in the initial downlink signal.

At operation S331b, determining, according to the first downlink data block, a downlink alignment flag bit of the second downlink electrical signal.

In the first downlink identifier, the plurality of data segments corresponding to first downlink data blocks in the plurality of channels are arranged to be crossed with each other.

It should be noted that, in the embodiment of the present disclosure, the first downlink data block is obtained by splicing bit streams obtained by performing cross-splitting on the first downlink identifier. In other words, the plurality of data segments in the first downlink identifier are spliced to obtain the first downlink data block, and the data segments corresponding to first downlink data block in the plurality of channels are arranged to be crossed with each other in the first downlink identifier. Therefore, the first downlink identifier can be recovered by cross arrangement of the data segments of the first downlink data blocks in the plurality of channels.

The first downlink identifier, i.e., a specific field in the initial downlink signal corresponding to the bit stream as the downlink alignment flag bit, is not particularly limited in the present disclosure. In some embodiments, in the downlink direction, the first downlink identifier is associated with a physical synchronization sequence (PSync) in a physical synchronization block downstream (PSBd). For example, when the initial downlink signal is a non-interleaved bit stream, the first downlink identifier is PSync in the PSBd; and when the initial downlink signal is an interleaved bit stream, the first downlink identifier is a specific bit stream formed by interleaving PSync in the PSBd, and is closely associated with an interleaving depth.

In some embodiments, bit streams obtained by performing cross-splitting on the first downlink identifier are spliced as the downlink alignment flag bit. For example, when two channels are provided, the first downlink identifier is PSync, bit streams composed of odd segments of PSync are spliced as the downlink alignment flag bit of one channel, and bit streams composed of even segments of PSync are spliced as the downlink alignment flag bit of the other channel.

Accordingly, in some embodiments, determining, according to the first downlink data block, the downlink alignment flag bit of the second downlink electrical signal (i.e., operation S331b) includes: taking the first downlink data block as the downlink alignment flag bit of the second downlink electrical signal.

In some embodiments, while determining, according to the first downlink data block, the downlink alignment flag bit of the second downlink electrical signal, the first downlink data block is extended to avoid increasing the probability of synchronization errors caused by a length of the downlink alignment flag bit smaller than a length of the first downlink identifier after cross-splitting.

How to extend the first downlink data block is not particularly limited in the present disclosure.

In some embodiments, first downlink data blocks of two consecutive physical frames in the second downlink electrical signal are spliced as the downlink alignment flag bit.

Accordingly, in some embodiments, determining, according to the first downlink data block, the downlink alignment flag bit of the second downlink electrical signal (i.e., operation S331b) includes: splicing first downlink data blocks of two consecutive physical frames in the channel to obtain the downlink alignment flag bit of the second downlink electrical signal.

In some embodiments, a length of the first downlink data block is extended to obtain the downlink alignment flag bit.

Accordingly, in some embodiments, determining, according to the first downlink data block, the downlink alignment flag bit of the second downlink electrical signal (i.e., operation S331b) includes: extending a length of the first downlink data block to obtain the downlink alignment flag bit of the second uplink electrical signal, where the extended length of the first downlink data block is equal to a length of the first downlink identifier.

How to extend the length of the first downlink data block is not particularly limited in the present disclosure, for example, the length of the first downlink data block may be extended by means of copying, XOR operation, and the like.

In some embodiments, the synchronization performance is determined by detecting a decoding condition of FEC codes and a deframing condition of GEM frames, and re-synchronization is performed once the synchronization performance is degraded, so as to avoid increasing the probability of synchronization errors caused by the length of the downlink alignment flag bit smaller than the length of the first identifier after cross-splitting.

Accordingly, in some embodiments, referring to FIG. 11, after performing, according to the downlink granularity, channel alignment on the second downlink electrical signals in the plurality of channels for recovering and obtaining the target downlink signal after the alignment (i.e., operation S33), the data transmission method further includes the following operations S341 to S342.

At operation S341, determining a third correct rate for decoding FEC codes in the target downlink signal, and a fourth correct rate for deframing GEM frames.

At operation S342, re-synchronizing data under a condition that the third correct rate is below a fourth threshold and/or the fourth correct rate is below a fifth threshold.

In some embodiments, the third correct rate and the fourth correct rate may be represented by the number of FEC codes correctly decoded and the number of GEM frames correctly deframed, and the synchronization performance may be determined by determining the number of FEC codes correctly decoded and/or the number of GEM frames correctly deframed.

How to generate the second downlink electrical signals in the plurality of channels according to the downlink optical signal is not particularly limited in the present disclosure.

In some embodiments, the transmitting end modulates the first downlink electrical signals in the plurality of channels to obtain the downlink optical signal, and the receiving end demodulates the downlink optical signal correspondingly to obtain the second downlink electrical signals in the plurality of channels.

Accordingly, in some embodiments, generating, according to the downlink optical signal, the second downlink electrical signals in the plurality of channels (i.e., operation S32) includes: demodulating the downlink optical signal to obtain the second downlink electrical signals in the plurality of channels.

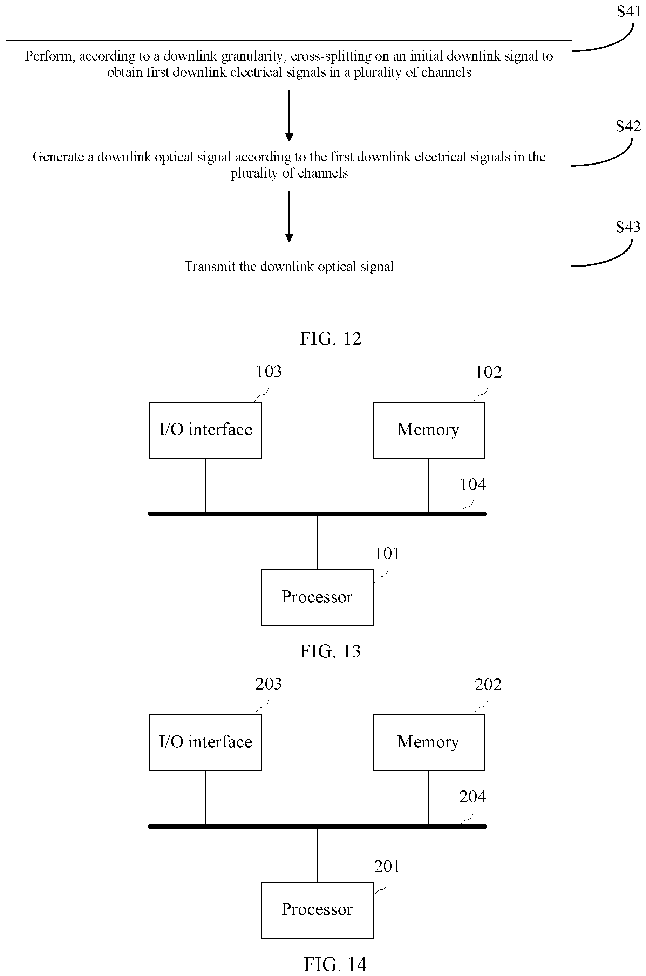

Referring to FIG. 12, an embodiment of the present disclosure further provides a data transmission method which includes the following operations S41 to S43.

At operation S41, performing, according to a downlink granularity, cross-splitting on an initial downlink signal to obtain first downlink electrical signals in a plurality of channels.

At operation S42, generating a downlink optical signal according to the first downlink electrical signals in the plurality of channels.

At operation S43, transmitting the downlink optical signal.

The data transmission method provided in the embodiment of the present disclosure is applied to a downlink transmitting end. In an embodiment of the present disclosure, in the downlink direction, an OLT is used as a transmitting end, and an ONU is used as a receiving end.

In an embodiment of the present disclosure, at the transmitting end, cross-splitting are performed on the initial downlink signal according to the preset downlink granularity to obtain the first downlink electrical signals in the plurality of channels, and then the downlink optical signal is generated according to the first downlink electrical signals in the plurality of channels and transmitted to the receiving end. The number of channels is not particularly limited in the present disclosure, for example, the number of channels may be 2, 4, 8, or the like.

It should be noted that, in the embodiment of the present disclosure, the downlink transmitting end performing cross-splitting on the initial downlink signal according to the preset downlink granularity refers to dividing, according to the preset downlink granularity, the initial downlink signal into a plurality of data segments, where each data segment consists of at least one bit satisfying the preset downlink granularity in the initial downlink signal. Assuming that the downlink transmitting end has X channels, every X adjacent data segments in the initial downlink signal are divided into X different channels, respectively, and a bit stream formed by the data segments divided into each channel is the first downlink electrical signal in the channel. For example, the downlink transmitting end has X channels, and the preset downlink granularity is N bits, that is, every N bits in the initial downlink signal are divided into a data segment, then a bit stream obtained by splicing an (iX)N^{th} bit and the following N-1 bits is taken as the first downlink electrical signal in one channel, a bit stream obtained by splicing an (iX+1)N^{th} bit and the following N-1 bits is taken as the first downlink electrical signal in one channel, ..., and a bit stream obtained by splicing an (iX+X-1)N^{th} bit and the following N-1 bits is taken as the first downlink electrical signal in one channel, so as to obtain X first downlink electrical signals corresponding to the X channels, respectively, where i takes 0, 1, 2, 3, ... in sequence.

In some embodiments, the downlink transmitting end has two channels, and when cross-splitting are performed on the initial downlink signal according to the preset downlink granularity, the plurality of data segments obtained by splitting the initial downlink signal may be classified into odd segments and even segments. A bit stream obtained by splicing the odd segments is taken as one first downlink electrical signal, and a bit stream obtained by splicing the even segments is taken as the other first downlink electrical signal.

The preset granularity is not particularly limited in the present disclosure, for example, the preset granularity may be 1 bit, 4 bits, or 8 bits.

In the embodiments of the present disclosure, by performing cross-splitting on the initial downlink signal by the downlink transmitting end, a rate of the NRZ signal is reduced. That is, the plurality of first downlink electrical signals obtained by performing cross-splitting on the initial downlink signal each have a rate lower than the initial downlink signal. In some embodiments, a sum of rates of the plurality of first downlink electrical signals is equal to the rate of the initial downlink signal. For example, the initial downlink signal is a 50G NRZ signal, and two 25G NRZ signals are obtained through cross-splitting; or the initial downlink signal is a 100G NRZ signal, and two 50G NRZ signals are obtained through cross-splitting; or the initial downlink signal is a 100G NRZ signal, and four 25G NRZ signals are obtained through cross-splitting.

In the embodiments of the present disclosure, by reducing the rate of the NRZ signal, high-rate optical transmission can be implemented by low-rate hardware devices. For example, the initial downlink signal is a 50G NRZ signal which is split into two 25G NRZ signals after cross-splitting at the transmitting end, and a 50G NRZ signal is recovered at the receiving end. The transmitting end and the receiving end may process the two 25G NRZ signals based on 25G hardware devices, and transmission is performed with a 50G optical signal, thereby implementing 50G optical transmission based on 25G hardware devices.

According to the data transmission method provided in the embodiment of the present disclosure, in the downlink direction, the transmitting end splits a high-rate initial signal into a plurality of low-rate electrical signals through cross-splitting, which are then transmitted to the receiving end through the high-rate optical signal, while the receiving end can recover the plurality of low-rate electrical signals to the high-rate target signal through cross-recovery. In this process, both the transmitting end and the receiving end can process low-rate electrical signals by low-rate hardware devices, so that high-rate optical transmission can be implemented based on more cheap and mature low-rate hardware devices while reducing the implementation difficulty of high-rate optical transmission.

How to generate the downlink optical signal according to the first downlink electrical signals in the plurality of channels is not particularly limited in the present disclosure.

In some embodiments, generating the downlink optical signal according to the first downlink electrical signals in the plurality of channels (i.e., operation S42) includes: modulating the first downlink electrical signals in the plurality of channels to obtain the downlink optical signal.

Referring to FIG. 13, an embodiment of the present disclosure further provides an OLT, including: one or more processors 101; a memory 102 having one or more programs stored thereon which, when executed by the one or more processors, cause the one or more processors to implement the data transmission method according to an embodiment of the present disclosure as described with reference to FIGs. 1 to 6, and/or the data transmission method according to an embodiment of the present disclosure as described with reference to FIG. 12.

In addition, the OLT may further include one or more I/O interfaces 103 connected between the one or more processors and the memory, and configured to enable information interaction between the one or more processors and the memory.

The processor 101 is a device with a data processing capability, including but not limited to a central processing unit (CPU), or the like. The memory 102 is a device with a data storage capability, including but not limited to, a random access memory (RAM, more specifically SDRAM, DDR, etc.), a read-only memory (ROM), an electrically erasable programmable read-only memory (EEPROM) or a flash memory (FLASH). The I/O interface (read/write interface) 103 is connected between the processor 101 and the memory 102 to enable information interaction between the processor 101 and the memory 102, and includes, but is not limited to, a bus or the like.

In some embodiments, the processor 101, the memory 102, and the I/O interface 103 are interconnected via a bus 104, and further connected to other components of a computing device.

In some embodiments, the OLT includes an OLT chip including a plurality of electrical interfaces, each of which corresponds to one channel.

In some embodiments, the OLT includes an optical-to-electrical conversion chip and a media access control (MAC) layer chip, and there are a plurality of channels from the optical-to-electrical conversion chip to the MAC layer chip.

Referring to FIG. 14, an embodiment of the present disclosure further provides an ONU, including: one or more processors 201; and a memory 202 having one or more programs stored thereon which, when executed by the one or more processors, cause the one or more processors to implement the data transmission method according to an embodiment of the present disclosure as described with reference to FIGs. 7 to 11.

In addition, the ONU may further include one or more I/O interfaces 203 connected between the processors and the memory, and configured to enable information interaction between the one or more processors and the memory.

The processor 201 is a device with a data processing capability, including but not limited to a central processing unit (CPU), or the like. The memory 202 is a device with a data storage capability, including but not limited to, a random access memory (RAM, more specifically SDRAM, DDR, etc.), a read-only memory (ROM), an electrically erasable programmable read-only memory (EEPROM) or a flash memory (FLASH). The I/O interface (read/write interface) 203 is connected between the processor 201 and the memory 202 to enable information interaction between the processor 201 and the memory 202, and includes, but is not limited to, a bus or the like.

In some embodiments, the processor 201, the memory 202, and the I/O interface 203 are interconnected via a bus 204, and further connected to other components of a computing device.

In some embodiments, the ONU includes an ONU chip including a plurality of electrical interfaces, each of which corresponds to one channel.

In some embodiments, the ONU includes an optical-to-electrical conversion chip and a media access control (MAC) layer chip, and there are a plurality of channels from the optical-to-electrical conversion chip to the MAC layer chip.

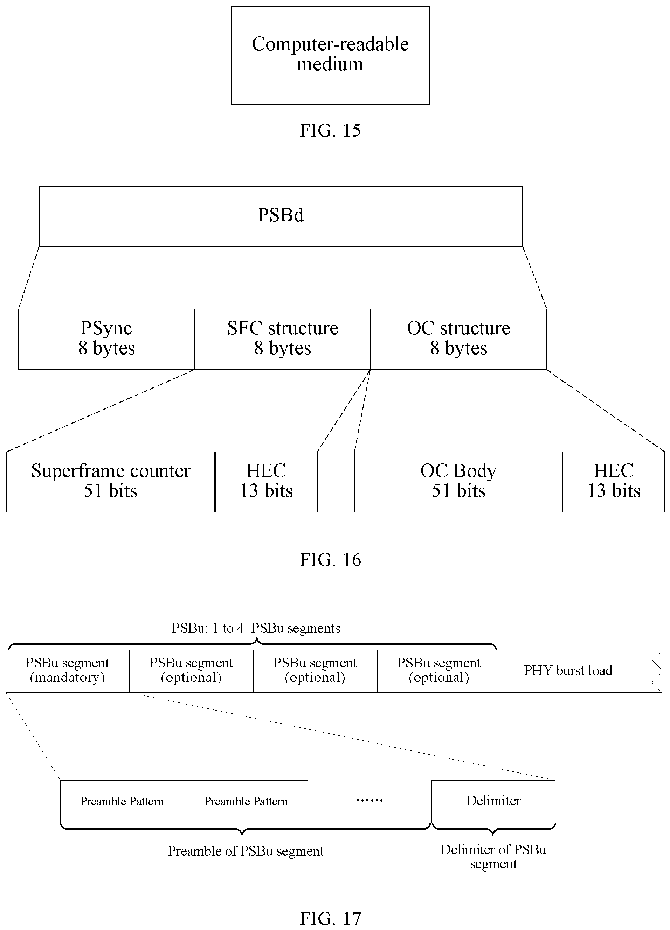

Referring to FIG. 15, an embodiment of the present disclosure further provides a computer-readable medium storing a computer program thereon which, when executed by a processor, causes the processor to implement the data transmission method according to any embodiment of the present disclosure.

To improve understanding of the technical solution provided in the embodiments of the present disclosure for those skilled in the art, the technical solution provided in the embodiments of the present disclosure will be further described in detail below with the help of specific examples.

### First Example

This example is applied to an uplink and downlink data transmission environment of a 50G PON system, and functions on OLT and ONU devices. A solution of multiplexing and demultiplexing based on an N-bit granularity is adopted. At the transmitting end, two 25Gbps NRZ channels are used to complete data transmission of 50Gbps, and at the receiving end, original data is also recovered in a dual-channel manner.

At the OLT transmitting end in the downlink direction, each frame of a 50G NRZ electrical signal is interleaved based on crossed parity according to a length of the N-bit granularity to form two new 25G NRZ electrical signals, and PSync in a PSBd data block of original downlink physical frames of the OLT is also interleaved based on crossed parity according to the length of the N-bit granularity to form two new bit streams, which are used in this example as flags for synchronization and data channel alignment by an ONU receiver.

FIG. 16 is a schematic diagram of a data structure in which a downlink PSync is located. For example, a bit stream obtained by splicing an AN^{th} bit and the following N-1 bits in PSync is taken as an alignment flag bit for channel 0 (Lane0) (where A is an even number, and A = 0, 2, 4, ...), a bit stream obtained by splicing a BN^{th} bit and the following N-1 bits in PSync is taken as an alignment flag bit for channel 1 (Lane1) (where B is an odd number, and B = 1, 3, 5, ...). At the receiving end, two 25G NRZ electrical signals are formed through optical-to-electrical conversion, and then, the ONU performs data synchronization, dual-channel data alignment, and 50G NRZ data recovery by using the synchronization and data channel alignment flags formed at the OLT side.

At the ONU transmitting end in the uplink direction, each frame of the 50G NRZ electrical signal is also interleaved based on crossed parity according to a length of the N-bit granularity to form two new 25G NRZ electrical signals, and Delimiter of a last PSBu segment in an original uplink burst physical (Burst PHY) frame of the ONU is also interleaved based on crossed parity according to the length of the N-bit granularity to form two new bit streams, which are used in this example as flags for data channel alignment by an OLT receiver (where a new bit stream formed by a preamble is used for uplink synchronization).

FIG. 17 is a schematic diagram of a data structure in which Delimiter is located. When the uplink data synchronization is completed, the data channel alignment flag formed by Delimiter is used for dual-channel data alignment and 50G NRZ data recovery. In the ITU-T standard, Delimiter of the last PSBu segment in each Burst PHY frame has a fixed length, which may be configured to 32 bits or 64 bits. Therefore, a bit stream obtained by splicing a CN^{th} bit and the following N-1 bits in Delimiter may be taken as an alignment flag bit for channel 0 (Lane0) (where C is an even number, and C = 0, 2, 4, ...), and a bit stream obtained by splicing a DN^{th} bit and the following N-1 bits in Delimiter may be taken as an alignment flag bit for channel 1 (Lane1) (where D is an odd number, and D = 1, 3, 5, ...).

### Second Example

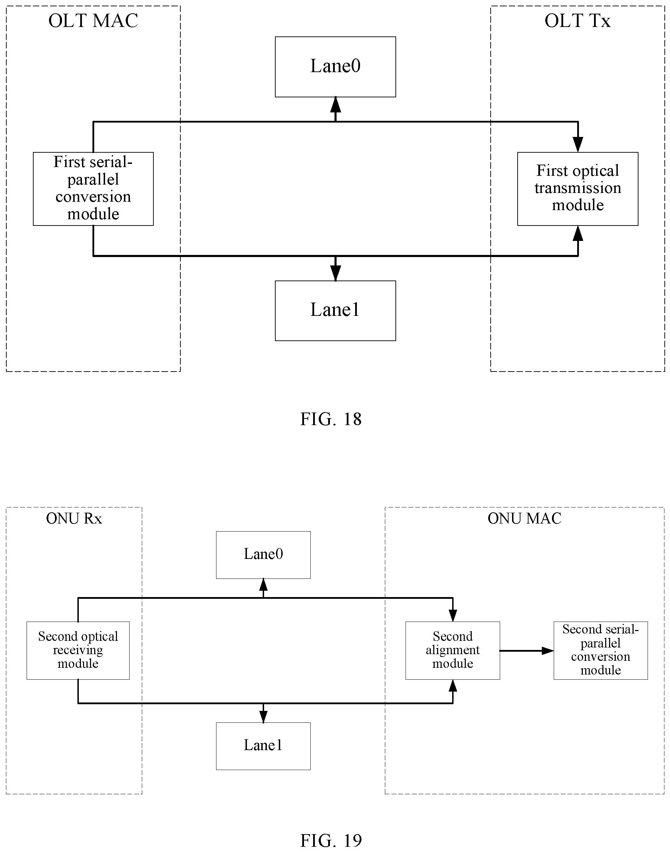

This example corresponds to a downlink direction. FIG. 18 is a schematic diagram of an OLT transmitting end in the downlink direction, and FIG. 19 is a schematic diagram of an ONU receiving end in the downlink direction.

The OLT uses, in an MAC layer, a first serial-parallel conversion module to divide a 50G NRZ into two pieces of 25G NRZ downlink data based on crossed parity according to a length of an N-bit granularity, and then transmits the two pieces of 25G NRZ downlink data to an optical transmitter over two independent channels (Lane0/Lane1). The two 25G NRZ electrical signals are received by the optical transmitter and then converted into a 50G optical signal that is then transmitted to a downstream ONU.

In this process, the first serial-parallel conversion module has a function of reducing a rate of the NRZ signal, and the conversion may be completed by an external chip such as an independent DSP/FPGA or the like, or by an internal MAC chip. In addition, an optical transmitting module can simultaneously receive the electrical signals in two NRZ channels, to modulate and transmit the signals, or convert the electrical signals into a 50G NRZ electrical signal through rate interleaving and then transmit the signal after electrical-to-optical conversion.

Upon receiving the optical signal transmitted from the OLT, the ONU optical receiver performs optical-to-electrical conversion to form two pieces of 25G NRZ data. Similar to the optical transmitting module, an optical receiving module can obtain the two pieces of 25G NRZ data by demodulation.

Since the ONU receiver splits the electrical signal into two NRZ signals after the optical-to-electrical conversion, data of the two channels are desired to be parsed to locate flags for synchronization and data channel alignment by the ONU receiver, and thereby synchronization is performed and the data of the two channels are strictly aligned in time.

Data of odd and even channels obtained at the ONU side is subjected to cross-recovery according to a channel parity rule configured by the first serial-parallel conversion module at the OLT side, where a single recovered bit has a duration 1/2 shorter than a single bit in the odd and even channels, and finally NRZ data of 50G rate is obtained.

In addition, PSync of 50G rate is specified as 8 bytes in the ITU-T G.9804.3 standard, which, after being interleaved based on crossed parity according to a length of the N-bit granularity, is converted into two signals of 4 bytes of 25G rate. Since each symbol for synchronization in each channel is shortened by half, the probability of synchronization errors is increased. Therefore, any one of the following solutions may be adopted to solve the problem:
1) taking two consecutive physical frames of 25G rate in each channel together as a jump condition for a synchronous state machine to reduce synchronous bit errors;
2) increasing a length of a synchronous flag in each channel to 8 bytes; or
3) determining a synchronization condition of a downlink receiving end from M FECs correctly decoded and K GEM frames correctly deframed (where M and K is configurable, for example, M = 3, and K = 1), and re-synchronizing once the synchronization performance is degraded.

### Third Example

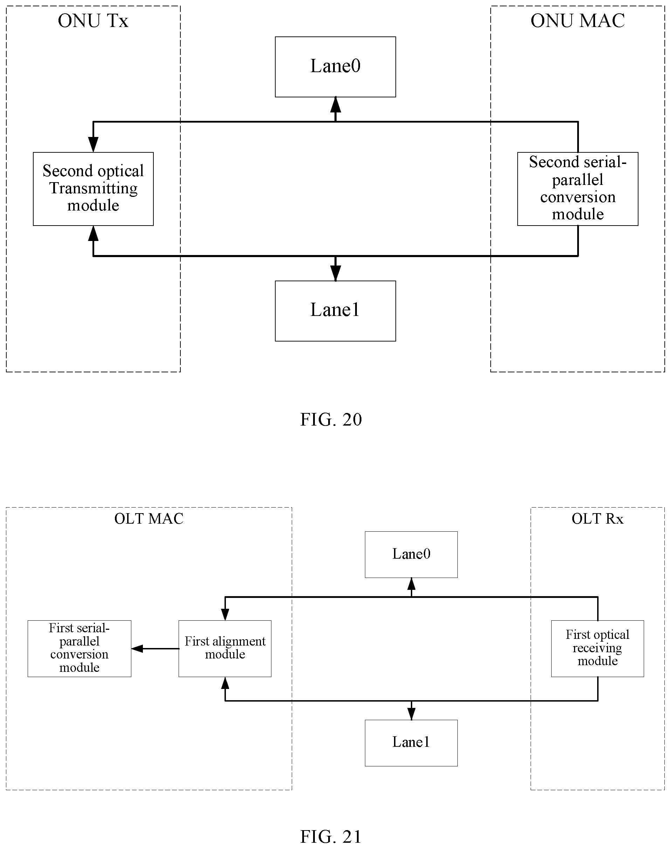

This example corresponds to an uplink direction. FIG. 20 is a schematic diagram of an ONUs transmitting end in the uplink direction, and FIG. 21 is a schematic diagram of an OLT receiving end in the uplink direction.

In the uplink direction, an MAC layer of the ONU uses a second serial-parallel conversion module to divide a 50G NRZ into two pieces of 25G NRZ uplink data based on crossed parity according to a length of an N-bit granularity, and then transmits the two pieces of 25G NRZ uplink data to an optical transmitter over two independent channels (Lane0/Lane1). The two 25G NRZ electrical signals are received by the optical transmitter and then converted into a 50G optical signal that is then transmitted to an upstream OLT.

In this process, the second serial-parallel conversion module has a function of reducing a rate of the NRZ signal, and the conversion may be completed by an external chip such as an independent DSP/FPGA or the like, or by an internal MAC chip. In addition, an optical transmitting module can simultaneously receive the electrical signals in two NRZ channels, to modulate and transmit the signals, or convert the electrical signals into a 50G NRZ electrical signal through rate interleaving and then transmit the signal after electrical-to-optical conversion.

Upon receiving the optical signal transmitted from the ONU, the OLT optical receiver performs optical-to-electrical conversion to form two pieces of 25G NRZ data. Similar to the optical transmitting module, an optical receiving module can obtain the two pieces of 25G NRZ data by demodulation or deinterleaving or the like.

Since the OLT receiver splits the electrical signal into two NRZ signals after the optical-to-electrical conversion, data of the two channels are desired to be parsed to locate flags for synchronization and data channel alignment by the OLT receiver, and thereby synchronization is performed and the data of the two channels are strictly aligned in time.

Data of odd and even channels obtained at the OLT side is subjected to cross-recovery according to a channel parity rule configured by the second serial-parallel conversion module at the ONU side, where a single recovered bit has a duration 1/2 shorter than a single bit in the odd and even channels, and finally NRZ data of 50G rate is obtained.

In addition, after the data of 50G rate is split into two pieces of data of 25G rate according to the parity, an original sequential relationship of 0 and 1 is changed, which may cause that in the uplink process, the OLT side misjudges the ONU as a rogue ONU after receiving the ONU data, thereby causing false lock. This problem can be avoided by detecting each burst (which necessarily starts with PSBu), that is, by performing alignment and PSBu detection once after synchronization to check whether there is a rogue ONU; and processing according to a rogue ONU mechanism if there is a rogue ONU.

In addition, a preamble pattern is a PRBS pattern configured by the OLT with an indefinite length, which, may be the same as one of Delimiter division results of PSBu segments when being split for transmission over two channels, thereby causing false lock of the ONU at the OLT side. This problem may be avoided by the OLT determining whether at least P bits of L bits of a front preamble part corresponding to an identified Delimiter identifier are the same as a preset preamble (where L and P is configurable, for example, L = 64, and P = 57). False lock is excluded if at least P bits of L bits of the front preamble part corresponding to the identified delimiter identifier are the same as the preset preamble. False lock is determined if there are no at least P bits of L bits of the front preamble part corresponding to the identified delimiter identifier the same as the preset preamble, and the OLT needs to re-identify a position of Delimiter.

Those of ordinary skill in the art will appreciate that all or some operations of the above described method, functional modules/units in the system and apparatus may be implemented as software, firmware, hardware, and suitable combinations thereof. In a hardware implementation, the division between the functional modules/units mentioned in the above description does not necessarily correspond to the division of physical components, for example, one physical component may have multiple functions, or one function or operation may be performed cooperatively by several physical components. Some or all physical components may be implemented as software executed by a processor, such as a CPU, a digital signal processor or microprocessor, or implemented as hardware, or implemented as an integrated circuit, such as an application specific integrated circuit. Such software may be distributed on a computer-readable medium which may include a computer storage medium (or non-transitory medium) and a communication medium (or transitory medium). As is well known to those of ordinary skill in the art, the term computer storage medium includes volatile and nonvolatile, removable and non-removable medium implemented in any method or technology for storing information, such as computer-readable instructions, data structures, program modules or other data. The computer storage medium includes, but is not limited to, an RAM, an ROM, an EEPROM, a flash or any other memory technology, a CD-ROM, a digital versatile disk (DVD) or any other optical disk storage, a magnetic cartridge, a magnetic tape, a magnetic disk storage or any other magnetic storage device, or may be any other medium used for storing the desired information and accessible by a computer. Moreover, it is well known to those ordinary skilled in the art that a communication medium typically includes a computer-readable instruction, a data structure, a program module, or other data in a modulated data signal, such as a carrier wave or other transport mechanism, and may include any information delivery medium.

The present disclosure has disclosed exemplary embodiments, and although specific terms are employed, they are used and should be interpreted merely in a generic and descriptive sense, not for purposes of limitation. In some instances, as would be apparent to one skilled in the art, features, characteristics and/or elements described in connection with a particular embodiment may be used alone or in combination with features, characteristics and/or elements described in connection with another embodiment, unless expressly stated otherwise. It will, therefore, be understood by those skilled in the art that various changes in form and details may be made therein without departing from the scope of the present disclosure as set forth in the appended claims.

## Claims

1. A data transmission method, comprising:
receiving an uplink optical signal;
generating, according to the uplink optical signal, second uplink electrical signals in a plurality of channels, wherein the second uplink electrical signals in the plurality of channels respectively correspond to first uplink electrical signals in the plurality of channels obtained by an uplink transmitting end performing cross-splitting on an initial uplink signal according to an uplink granularity; and
performing, according to the uplink granularity, channel alignment on the second uplink electrical signals in the plurality of channels for recovering and obtaining a target uplink signal after the alignment.

2. The data transmission method according to claim 1, wherein performing, according to the uplink granularity, channel alignment on the second uplink electrical signals in the plurality of channels comprises:
parsing the second uplink electrical signal in each channel to determine an uplink alignment flag bit of the second uplink electrical signal in each channel; and
aligning the second uplink electrical signals in the plurality of channels according to the uplink alignment flag bit of the second uplink electrical signal in each channel.

3. The data transmission method according to claim 2, wherein parsing the second uplink electrical signal in each channel to determine the uplink alignment flag bit of the second uplink electrical signal in each channel comprises:
determining, for the second uplink electrical signal in any channel, a first uplink data block in the second uplink electrical signal, wherein the first uplink data block corresponds to a plurality of data segments of a first uplink identifier in the initial uplink signal; and
determining, according to the first uplink data block, an uplink alignment flag bit of the second uplink electrical signal,
wherein in the first uplink identifier, the plurality of data segments corresponding to first uplink data blocks in the plurality of channels are arranged to be crossed with each other.

4. The data transmission method according to claim 3, wherein determining, according to the first uplink data block, the uplink alignment flag bit of the second uplink electrical signal comprises:
taking the first uplink data block as the uplink alignment flag bit.

5. The data transmission method according to claim 3, wherein determining, according to the first uplink data block, the uplink alignment flag bit of the second uplink electrical signal comprises:
splicing first uplink data blocks of two consecutive physical frames in the channel to obtain the uplink alignment flag bit.

6. The data transmission method according to claim 3, wherein determining, according to the first uplink data block, the uplink alignment flag bit of the second uplink electrical signal comprises:
extending a length of the first uplink data block to obtain the uplink alignment flag bit, wherein the extended length of the first uplink data block is equal to a length of the first uplink identifier.

7. The data transmission method according to any one of claims 3 to 6, wherein the first uplink identifier is Delimiter in a physical synchronization block upstream, called PSBu, or
the first uplink identifier is a bit stream formed by interleaving Delimiter in the PSBu.

8. The data transmission method according to any one of claims 1 to 6, wherein after performing, according to the uplink granularity, channel alignment on the second uplink electrical signals in the plurality of channels for recovering and obtaining the target uplink signal after the alignment, the method further comprises:
determining a first correct rate for decoding forward error correction, called FEC, codes in the target uplink signal, and a second correct rate for deframing gigabit-capable passive optical network, called GPON, encapsulation mode, called GEM, frames; and
re-synchronizing data under the condition that the first correct rate is below a first threshold and/or the second correct rate is below a second threshold.

9. The data transmission method of claim 3, further comprising:
determining a second uplink identifier according to the first uplink data blocks in the plurality of channels, wherein the second uplink identifier corresponds to the first uplink identifier;
determining a proportion of identical bits in a preamble before the second uplink identifier and in a preset preamble; and
re-determining the second uplink identifier under a condition that the proportion is less than a third threshold.

10. The data transmission method of claim 3, further comprising:
determining a second uplink identifier according to the first uplink data blocks in the plurality of channels, wherein the second uplink identifier corresponds to the first uplink identifier; and
judging, according to the second uplink identifier, whether an optical network unit transmitting the uplink optical signal is abnormal.

11. The data transmission method according to any one of claims 1 to 6, wherein generating, according to the uplink optical signal, the second uplink electrical signals in the plurality of channels comprises:
demodulating the uplink optical signal to obtain the second uplink electrical signals in the plurality of channels.

12. A data transmission method, comprising:
performing, according to an uplink granularity, cross-splitting on an initial uplink signal to obtain first uplink electrical signals in a plurality of channels;
generating an uplink optical signal according to the first uplink electrical signals in the plurality of channels; and
transmitting the uplink optical signal.

13. The data transmission method according to claim 12, wherein generating the uplink optical signal according to the first uplink electrical signals in the plurality of channels comprises:
modulating the first uplink electrical signals in the plurality of channels to obtain the uplink optical signal.

14. A data transmission method, comprising:
receiving a downlink optical signal;
generating, according to the downlink optical signal, second downlink electrical signals in a plurality of channels, wherein the second downlink electrical signals in the plurality of channels respectively correspond to first downlink electrical signals in the plurality of channels obtained by a downlink transmitting end performing cross-splitting on an initial downlink signal according to a downlink granularity; and
performing, according to the downlink granularity, channel alignment on the second downlink electrical signals in the plurality of channels for recovering and obtaining a target downlink signal after the alignment.

15. The data transmission method according to claim 14, wherein performing, according to the downlink granularity, channel alignment on the second downlink electrical signals in the plurality of channels comprises:
parsing the second downlink electrical signal in each channel to determine a downlink alignment flag bit of the second downlink electrical signal in each channel; and
aligning the second downlink electrical signals in the plurality of channels according to the downlink alignment flag bit of the second downlink electrical signal in each channel.

16. The data transmission method according to claim 15, wherein parsing the second downlink electrical signal in each channel to determine the downlink alignment flag bit of the second downlink electrical signal in each channel comprises:
determining, for the second downlink electrical signal in any channel, a first downlink data block in the second downlink electrical signal, wherein the first downlink data block corresponds to a plurality of data segments of a first downlink identifier in the initial downlink signal; and
determining, according to the first downlink data block, a downlink alignment flag bit of the second downlink electrical signal,
wherein in the first downlink identifier, the plurality of data segments corresponding to first downlink data blocks in the plurality of channels are arranged to be crossed with each other.

17. The data transmission method according to claim 16, wherein determining, according to the first downlink data block, the downlink alignment flag bit of the second downlink electrical signal comprises:
taking the first downlink data block as the downlink alignment flag bit.

18. The data transmission method according to claim 16, wherein determining, according to the first downlink data block, the downlink alignment flag bit of the second downlink electrical signal comprises:
splicing first downlink data blocks of two consecutive physical frames in the channel to obtain the downlink alignment flag bit.

19. The data transmission method according to claim 16, wherein determining, according to the first downlink data block, the downlink alignment flag bit of the second downlink electrical signal comprises:
extending a length of the first downlink data block to obtain the downlink alignment flag bit, wherein the extended length of the first downlink data block is equal to a length of the first downlink identifier.

20. The data transmission method according to any one of claims 16 to 19, wherein the first downlink identifier is physical synchronization sequence, called PSync, in a physical synchronization block downstream, called PSBd, or
the first downlink identifier is a bit stream formed by interleaving PSync in the PSBd.

21. The data transmission method according to any one of claims 14 to 19, wherein after performing, according to the downlink granularity, channel alignment on the second downlink electrical signals in the plurality of channels for recovering and obtaining the target downlink signal after the alignment, the method further comprises:
determining a third correct rate for decoding forward error correction, called FEC, codes in the target downlink signal, and a fourth correct rate for deframing gigabit-capable passive optical network, called GPON, encapsulation mode, called GEM, frames; and
re-synchronizing data under a condition that the third correct rate is below a fourth threshold and/or the fourth correct rate is below a fifth threshold.

22. The data transmission method according to any one of claims 14 to 19, wherein generating, according to the downlink optical signal, the second downlink electrical signals in the plurality of channels comprises:
demodulating the downlink optical signal to obtain the second downlink electrical signals in the plurality of channels.

23. A data transmission method, comprising:
performing, according to a downlink granularity, cross-splitting on an initial downlink signal to obtain first downlink electrical signals in a plurality of channels;
generating a downlink optical signal according to the first downlink electrical signals in the plurality of channels; and
transmitting the downlink optical signal.

24. The data transmission method according to claim 23, wherein generating the downlink optical signal according to the first downlink electrical signals in the plurality of channels comprises:
modulating the first downlink electrical signals in the plurality of channels to obtain the downlink optical signal.

25. An optical line terminal, called OLT, comprising:
one or more processors;
a memory having one or more programs stored thereon which, when executed by the one or more processors, cause the one or more processors to implement the data transmission method according to any one of claims 1 to 11, and/or the data transmission method according to claim 23 or 24; and
one or more I/O interfaces connected between the processors and the memory, and configured to enable information interaction between the one or more processors and the memory.

26. An optical network unit, called ONU, comprising:
one or more processors; and
a memory having one or more programs stored thereon which, when executed by the one or more processors, cause the one or more processors to implement the data transmission method according to any one of claims 14 to 22, and/or the data transmission method according to claim 12 or 13.

27. A computer-readable medium storing a computer program thereon which, when executed by a processor, causes the processor to implement the data transmission method according to any one of claims 1 to 24.
